# EUROPEAN PATENT SPECIFICATION

(11) **EP 3 778 390 B1**
(45) Date of publication and mention of the grant of the patent: **13.07.2022**
(21) Application number: 19191889.5
(22) Date of filing: 15.08.2019
(51) Int. Cl.: B64C 39/02, B64D 1/08

(54) **SYSTEM, METHOD AND DEVICE FOR ATTACHING A TOOL OR A PAYLOAD TO AN UNMANNED AERIAL VEHICLE**
SYSTEM, VERFAHREN UND VORRICHTUNG ZUM ANBRINGEN EINES WERKZEUGS ODER EINER NUTZLAST AN EIN UNBEMANNTES LUFTFAHRZEUG
SYSTÈME, PROCÉDÉ ET DISPOSITIF DE FIXATION D'UN OUTIL OU D'UNE CHARGE UTILE À UN VÉHICULE AÉRIEN SANS PILOTE

(43) Date of publication of application: 17.02.2021
(73) Proprietor: Volocopter GmbH, 76646 Bruchsal (DE)
(72) Inventor: Infante Aguirre, Francisco Javier, 81739 München (DE); Staub, Nicolas, 80634 München (DE)
(74) Representative: Lemcke, Brommer & Partner Patentanwälte Partnerschaft mbB

(56) References cited:
- US-A1- 2012 035 787
- US-A1- 2017 305 570
- US-A1- 2018 072 415
- US-A1- 2019 127 085

## Description

The invention relates to a system comprising an Unmanned Aerial Vehicle, UAV, and an interface for attaching a tool or a payload to said UAV, according to claim 1.

The invention also relates to a method of operating an Unmanned Aerial Vehicle, UAV, according to claim 14.

There is currently no community-wide accepted tool or payload interface for UAS (Unmanned Aerial Systems) or UAV (Unmanned Aerial Vehicles), i.e., drones or the like, which shall hereinafter also and explicitly incorporate manned aircraft which navigate or can navigate in an automatic mode, meaning in a non-fully manual mode, e.g. with assistance from automation, either for stabilization, navigation or payload handling.

US2018/244401A1 discloses a mechanical interface, which can be provided on a small fixed wing aircraft for carrying a device to catch uncooperative drones.

US 2017/0305570 A1 discloses a system and method for calculating weight distribution of a drone. Fig. 1 of said document shows a schematic illustration of a drone 102 with attached payload frame 104. Payload frame 104 is connected to the drone using a coupling means 106. The payload frame 104 comprises payload modules 110, 112 as well as a microcontroller 116. Said microcontroller 116 is configured to communicate with a controller 118 of the drone (cf. paragraph [0050] of US'570). As explicitly mentioned in paragraph [0051] of US'570, electrical coupling means 120 include a communication interface which is configured to communicate a relative location of the payload modules and the payload frame as well as weight and volume of the payload modules to the controller of the drone. In a particular embodiment, the payload modules can also be configured to communicate further physical properties, such as weight distribution, center of mass, dimensions and angular mass of the controller of the drone.

US 2018/0072415 A1 discloses systems and methods to interchangeably couple two systems with unmanned vehicles.

US 2012/035787 A1 discloses a layered architecture for customer payload systems in connection with unmanned aerial vehicles.

US 2019/127085 A1 discloses a payload exchange facilitating connector and relates to the field of drones and other autonomously flown aerial vehicles.

None of the three key interface types, i.e., mechanical, electrical and logical, has been brought to an industry standard in the field of UAV, such as heavy-duty drones, e.g., for delivery and logistics or use in agriculture. In particular, there is no generic interface which would allow to swap tools or payload between such civilian heavy-duty drones. Moreover, the impact of additional payload on the flight control unit of an UAV has never been addressed in a generic way.

There is a need for a unified generic tool or payload interface for heavy-duty drones (UAV) with industrial tools or payloads. The interface structure should provide a standardized physical interface, electric interface and logical interface between the payload and the aircraft. Additionally, the interface should enable to account for physical effects generated by the tool or payload for flight control of the UAV.

It is the object of the present invention to provide a system of an Unmanned Aerial Vehicle, UAV, and a unified generic tool or payload interface for heavy-duty drones (UAV) with industrial tools or payloads, said interface for attaching a tool or a payload to said UAV, a structure of which provides a standardized physical interface, electric interface and logical interface between the tool or payload and the aircraft. Additionally, the interface shall enable to consider physical effects of the tool or payload for flight control of the UAV.

This object is achieved by providing a system comprising an Unmanned Aerial Vehicle,

UAV, and an interface for attaching a tool or a payload to said UAV, having the features of claim 1, and by providing a method of operating an UAV according claim 14.

Advantageous further embodiments are defined in the dependent claims.

According to the invention, there is provided a HMI (human machine interface) on the interface for a payload-flight-controller-tuning; i.e. choosing from a database (within the interface) payload- or tool-specific data which then is transmitted to the flight control. For example, an external operator could choose, e.g. over a touchpad or display with buttons which tool/payload is now attached and the related tool/payload data, such as e.g. weight, dimensions, etc., are transmitted to flight controller. Also, if there is an electrical energy supply unit, e.g. a battery, inside the interface the status of the electrical supply unit could be displayed on such HMI. Furthermore, a functionality of the tool can be triggered for test before flight. In this way, it is possible to consider physical effects of the tool or payload for flight control of the UAV.

The one first (physical) connecting element can be either mechanical, electromechanical, electromagnetic or magnetic (or any combination thereof), as long as it is suitable for securely connecting a tool or payload to the interface on said tool or payload side thereof.

Likewise, the one second (physical) connecting element can be either mechanical, electromechanical, electromagnetic or magnetic (or any combination thereof), as long as it is suitable for securely connecting for connecting the interface to an UAV on said vehicle side thereof.

Preferably, the interface can comprise, as the first connecting element, a mechanical attachment with the tool or payload in the form of two standard aerospace rails or profiles, on which payload can be securely attached with a range of aerospace standard attachments that can be obtained off the shelf, e.g., a simple pin mechanism, which is simple and highly cost-efficient.

In a further embodiment of the system according to the invention, the at least one second connecting element comprises a pin or bolt type connector. Applicant has found that this is a secure, yet efficient way of fastening the interface to a UAV, in particular to an aircraft's main airframe. Preferably, a plurality of such pins or bolts are arranged in flat polygonal structure, in particular four of them arranged in the form of a rectangle.

The at least one sensor unit can be of any type which is suitable for measuring at least one physical property of a tool or payload, when said tool or payload is connected to the interface. Preferably, in an embodiment of the interface according to the invention, the at least one sensor unit comprises a force sensor, e.g. a load cell, which can be used to measure a mass of the tool or payload. Furthermore, it becomes possible to measure the wrench (6D forces) of the payload, especially when providing more than one load cell. Further static quantities that can be measured with appropriate sensors are -without limitation - a projected surface of the payload in the forward flying direction, etc. Potential dynamic quantities that can be measured are - again without limitation - a force along a vertical or z-axis, and a moment of the tool or payload and of the interface around the roll and pitch axes of the aircraft. According to the invention, it becomes possible, via the at least one control unit of the interface in operative connection with said at least one sensor unit, to provide said data related to said measured at least one physical property (i.e., any of the aforementioned quantities) to a flight control unit of the UAV in order to take them into account for flight control of the UAV.

In a further embodiment of the system according to the invention, the at least one control unit comprises power electronics, which power electronics are devised for adapting a power characteristic of the control unit to a power characteristic of the UAV and/or to a power characteristic of the tool or payload.

An electrical interface between the tool or payload and the interface on the one hand and the interface and the aircraft on the other hand can be realized using standard aerospace connectors or cables. Power characteristics and specifications should encompass standard (power) ranges, and said power electronics serve to make the aircraft and the payload match electrically, e.g., in terms of available voltage. Alternatively, a fixed power specification could be given, which would eliminate the need for providing power electronics. However, this would force both aircraft and tool or payload manufacturers to comply, which may be an issue.

In a further embodiment of the system according to the invention, the at least one control unit comprises a (basic) input/output (I/O) or a more complex logical interface unit adapted for providing data related to said measured at least one physical property to the UAV for triggering at least one tool or payload related function. In this context, the interface preferably just provides (sensor) information which can be used to trigger actions or functions under control of the UAV's internal logic.

In a preferred embodiment, said functionality can comprise an emergency dropping of the tool or payload, e.g., by activating/deactivating an actuated (automated) locking mechanism. Further, the same automated locking mechanism could also be implemented to attach the payload or tool to the UAV. A correct positioning of the payload or tool in relation to the UAV or the interface can be realized by an external manual or automated system.

For instance, an actuated locking mechanism can be part of the mechanical (physical) interface with the tool or payload, i.e., the at least one first connecting element for connecting a tool or payload to the interface on said tool or payload side thereof. Such actuated locking mechanism can be devised to consume only little power and can be used to simplify tool or payload handling. It can also provide a quick release mechanism in case of inflight tool or payload malfunction. In this way, it allows for automated tool or payload release during flight, if the mission requires. For example, payload can be dropped on difficult/impossible landing area.

In this way, a logical interface, through which the control unit is devised for communicating with a flight control unit of the UAV for providing said with data related to said measured at least one physical property, can comprise only very basic I/O (input/output) in order to trigger a given functionality of the aircraft, e.g., the above-described emergency dropping of the tool or payload.

A simple I/O (input/output) logical interface can be used to also trigger payload functionality or to provide information (data) about payload parameters, for example, a sprayer (spraying on/off), tank (full/empty), or a sling load hook (open/close).

As the data from the sensor unit, at least in a preferred embodiment, is shared with the aircraft, the logical interface in that case needs to be more complex than just I/O in order to be able to transmit estimated weight, current forces and moments of the tool or payload. A more complex logical interface (like a data bus or a serial connection) can also embed messages with the simple I/O. Preferably, any interface is devised in such a way that only one single standardized small cable has to be plugged to the aircraft for achieving the connection.

In a corresponding embodiment of the system according to the invention, the interface further comprises at least one data communication element (i.e., a logical interface), which can be either wired (e.g., a plug connector) or wireless (e.g., an antenna), in operative connection with said control unit for at least receiving status data from a tool or payload connected to the interface.

In another embodiment of the system according to the invention, the at least one control unit comprises a computational unit, preferably a low power computational unit or a computer, which computational unit is devised for employing a more sophisticated communication protocol enabling to exchange status information between the UAV and the tool or payload.

This requires a more advanced logical interface together with said communication protocol in order to be able to exchange status data and information between the aircraft and the tool or payload. In the above-defined embodiment, such advanced logical interface is provided in order to be able to communicate between the interface and the aircraft. In order to manage the communication, said computational unit, preferably a low power computational unit or computer, can be integrated in the interface.

The interface can also comprise a one electrical energy supply unit, e.g. a battery or another source of electrical energy in order to make the interface and the tool or payload independent from the aircraft in terms of power. This ensures that the tool or payload does not drain power from the aircraft (and its propulsion train, which generally is electrically powered) even if the tool or payload itself is not self-powered. Power management for the tool or payload can be advantageously incorporated in the interface computer, i.e. said computational unit. Alternatively, or additionally, there can be an electrical energy supply unit, e.g. a battery or another source of electrical energy comprised in the tool or payload.

In a corresponding embodiment of the system according to the invention, there is provided at least one electrical energy supply unit, preferably a secondary (rechargeable) battery unit, for supplying electrical energy to any electrical energy consuming unit comprised in the interface according to the invention and/or to a tool or payload, in particular but not limited to the interface computer, the sensor unit(s), the actuated locking mechanism and the tool or payload itself.

According to the invention, there is provided a human machine interface on the interface in connection with a database for choosing, from said database, payload- or tool-specific data for transmission to a flight control unit of an UAV. Preferably, the human machine interface comprises a touchpad or display with input means (e.g. buttons) for inputting and /or selecting (e.g. from said database) tool/payload data, such as e.g. weight, dimensions, etc., and/or for displaying the status of a battery or energy source of the tool or payload, and/or for triggering a functionality of the tool for test before flight.

In the Unmanned Aerial Vehicle, UAV, comprised in the system according to the invention, the at least one data communication element can be either wired (e.g., a plug) or wireless (e.g., an antenna).

In a further embodiment of the system according to the invention, said least one flight control unit of the UAV is devised for controlling said at least one propulsion unit and optionally an additional steering unit, e.g., a flap or a tiltable wing, for controlling a movement of the UAV based on said input data.

In order to be able to use the above-described advantages with a particular tool or payload there is provided, according to an embodiment of the system according to the invention, a tool or payload for use with an Unmanned Aerial Vehicle, UAV, comprising: a tool or payload body; at least one interface connecting element (i.e., a physical connecting element) attached to said tool or payload body, said interface connecting element being devised for connecting with the interface comprised in the system of the invention on the tool or payload side thereof.

Furthermore, in a preferred embodiment thereof, the tool or payload further comprises at least one data communication element (e.g., a plug or an antenna) devised for providing an operative connection with said control unit of the interface for at least relaying status data from the tool or payload to the interface in a connected state. From the interface, said status data can then be passed on to the aircraft's flight control unit.

Said flight control unit (or flight controller) is a key element to enable a safe and stabilized flight in many aerial system designs. While aircraft manufacturers design the flight controller for a generic use and then re-tune them for specific tools or payloads, providing them directly with measured physical quantities from the tool or payload, as proposed by the present invention, can improve their efficiency and remove the need for payload specific tuning.

As already stated above, the sensor unit(s) comprised in the interface comprised in the system according to the invention can be used to share certain physical properties or quantities between the tool or payload, the interface and the aircraft. Potential static properties that can be shared are - without any limitation - the mass of the tool or payload, the inertia of the tool or payload, the projected surface of the tool or payload in the forward flying direction, etc. In an alternative embodiment, some of said properties of the tool or payload are calculated by the flight control unit, while the sensor unit only measures and transmits forces.

Potential dynamic quantities that can be shared (again without any limitation) are the force along the z-axis, and the moment of the tool or payload plus the interface around the roll and pitch axis of the aircraft.

These quantities can be used to feed a dynamical model of the aircraft used in the flight controller, thus significantly improving performances and removing the need for payload specific tuning. Physical quantities from the payload or tool can be embedded in the tool or interface and transmitted to the flight controller to improve the flight control performance.

In a further embodiment of the system according to the invention, the system further comprises: a tool or payload as defined above, said interface connecting element of the tool or payload being mechanically fastened or fastenable, preferably detachably fastened or fastenable, to said interface on said tool or payload side thereof; wherein preferably the interface and the tool or payload are operatively connected or connectable via at least one data communication element of the tool or payload.

In a further embodiment of the system according to the invention, said least one flight control unit is devised for providing a signal for changing a connecting state of said tool or payload between a first connecting state, in which first connecting state said tool or payload is or can be fastened to the interface, and a second connecting state, in which second connecting state said tool or payload is or can be detached from the interface. This has already been described in detail before. Said signal for changing a connecting state of said tool or payload can be used to activate an actuated locking mechanism, in particular for emergency release of the tool or payload or for triggering another functionality of the tool or payload, e.g. a spraying mechanism based on GPS coordinates (which would be triggered by the flight controller), activating lights attached to the tool/payload, activating/deactivating a hook on a cable, etc.

According to another aspect of the invention, a method of operating an Unmanned Aerial Vehicle, UAV, in particular as defined above, comprises: connecting a tool or payload, in particular as defined above, to the UAV, using a tool or payload interface, which interface comprises: on a tool or payload side of the interface, at least one first connecting element for connecting a tool or payload to the interface on said tool or payload side thereof; on a vehicle side of the interface, at least one second connecting element for connecting the interface to an UAV on said vehicle side thereof; at least one sensor unit, which sensor unit is devised for measuring at least one physical property of a tool or payload, when said tool or payload is connected to the interface; at least one control unit in operative connection with said at least one sensor unit and with at least one data communication element, which control unit is devised for communicating with a flight control unit of the UAV for providing said flight control unit with data related to said measured at least one physical property via said at least one data communication element; a human machine interface on the interface in connection with a database for choosing, from said database, payload- or tool-specific data for transmission to a flight control unit of an UAV, wherein preferably the human machine interface comprises a touchpad or display with input means for inputting and/or selecting, e.g. from said database, tool/payload data, such as e.g. weight, dimensions, etc., and/or for displaying the status of an electrical energy supply unit, e.g. a battery, of the tool or payload or the interface, and/or for triggering a functionality of the tool for test before flight; the method further comprising: providing the UAV, preferably repeatedly during operation, through said tool or payload interface with status data from said tool or payload connected to the interface **and/or with** data from said tool or payload interface; and using said status data and/or said data in at least one flight control unit of the UAV for controlling an operation of the UAV and/or for controlling a connecting state of the tool or payload.

In the context of the present invention, sensor data supplied by the interface can be used to derive payload force and moment. An alternative method to recover these quantities, which is not covered by the present invention, would be through the use of advanced control techniques namely so-called "observers", which require a precise model of the aircraft and its aerodynamics, as well as a precise estimate of its full state (position, velocity, acceleration in 6D), to be able to reconstruct any external forces and moments. These external forces and moments would then comprise a mixture of influences of the payload, the wind and any unmodeled phenomena. However, the inherent complexity of this method and the imperfect precision achievable thereby make it an unlikely candidate for easy use in certified aircraft - unlike the present invention.

Additional features and advantages of the invention will now be described in detail with reference to the appended drawings.
Fig. 1 shows a UAV with attached interface and payload;
Fig. 2 shows a schematic block diagram of the UAV in Fig. 1; and
Fig. 3 shows four detailed views of the interface alone.

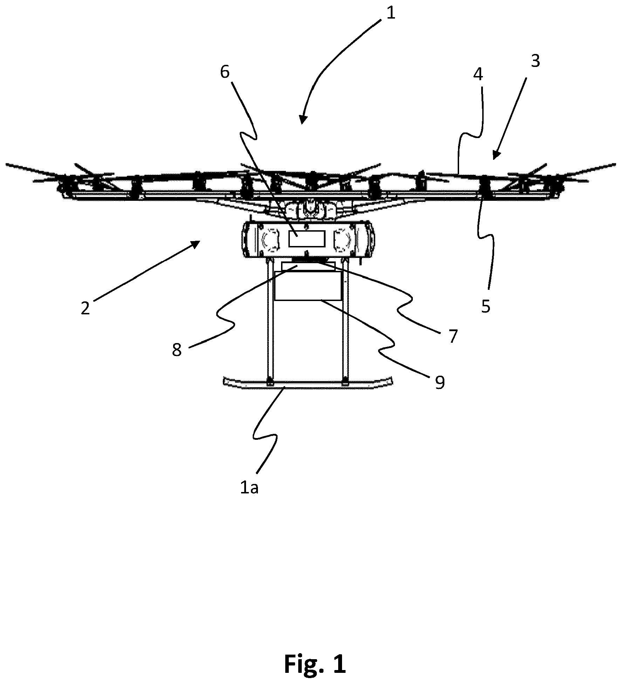

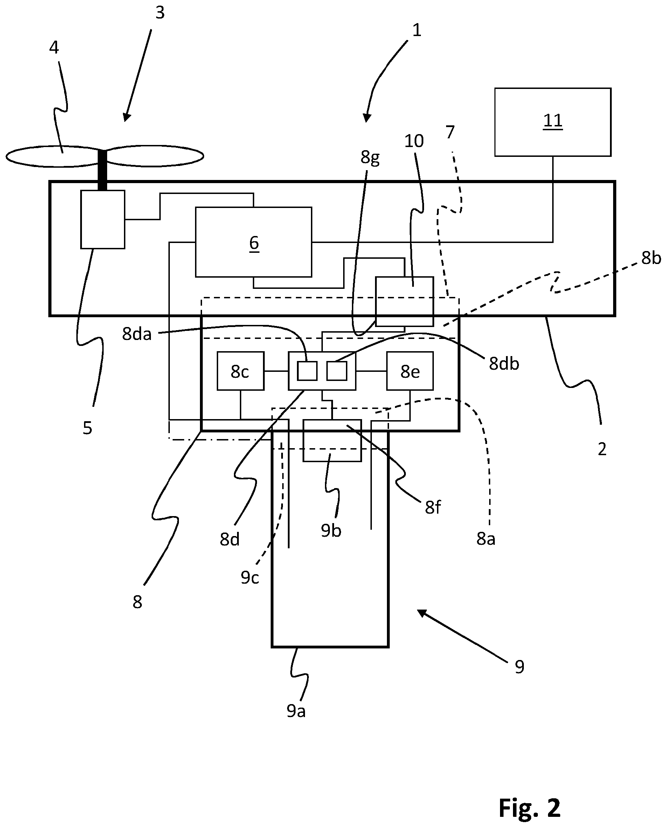

Fig. 1 shows a UAV or drone depicted at reference numeral 1. The UAV 1 comprises a main body or airframe 2 having a plurality of propulsion units 3, only one of which is marked explicitly. Each propulsion unit comprises a propeller (or rotor) 4 and an electrically powered motor unit 5 for driving said propeller 4. The propulsion units 3 are controlled by a flight control unit 6 comprised within said main body 2 (cf. Fig. 2 with further details). The main body 2 is fitted with a payload connecting element 7 to which is fastened an interface 8 for attaching payload 9, which will be detailed below with reference to Fig. 2. Reference numeral 1a denotes a landing gear.

In the following description, reference is made to a payload 9 only. However, the invention is not limited to any particular kind of payload 9. Said payload 9 could also take the form of a tool or any other object to be moved by UAV 1.

Interface 8 is mechanically fastened or fastenable, preferably detachably fastened or fastenable, to said UAV 1, and said interface 8 and said UAV 1 are operatively connected or connectable via at least one data communication element of the UAV which will be explained in more detail below with respect to Fig. 2. Payload 9 comprises an interface connecting element (Fig. 2) which is mechanically fastened or fastenable, preferably detachably fastened or fastenable, to said interface 8 on a payload side thereof. Furthermore, the interface 8 and the payload 9 are operatively connected or connectable via at least one data communication element of the payload which will also be explained in more detail below with respect to Fig. 2.

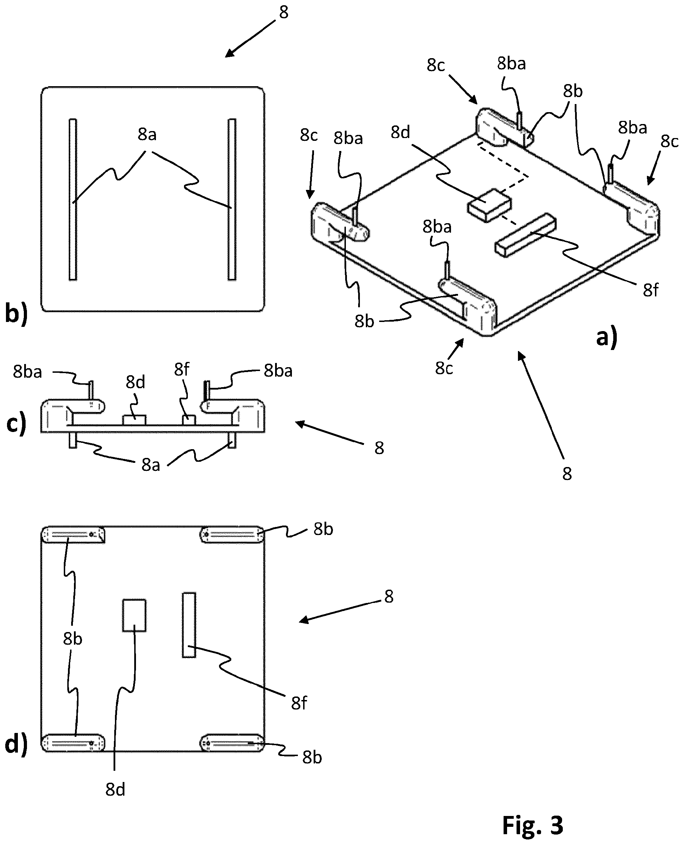

Fig. 2 shows a schematic block diagram of the UAV 1 in Fig. 1. Same reference numerals are used to designate same elements or elements having the same function. The flight control unit 6 is in cooperative connection with motor 5. Interface 8 comprises, on a payload side of the interface 8, at least one first connecting element 8a for physically connecting the payload 9 to the interface 8 on said payload side thereof. Interface 8 further comprises, on a vehicle side thereof, at least one second connecting element 8b for physically connecting the interface 8 to the UAV 1, i.e., the UAV main body 2, on said vehicle side thereof. The at least one second connecting element 8b is the mechanical counterpart of payload connecting element 7. The at least one second connecting element 8b can comprise a pin or bolt type connector, as will become apparent from Fig. 3. Interface 8 further comprises at least one sensor unit 8c, which sensor unit 8c is devised for measuring at least one physical property of the payload 9, when said payload 9 is connected to the interface 8. Preferably, said sensor 8c unit comprises a load cell. More preferably, a plurality of sensor units 8c (e.g.,load cells) are arranged in a (flat) polygonal pattern (cf. Fig. 3). Reference numeral 8d denotes an interface control unit which is in operative connection with said at least one sensor unit 8c. Control unit 8d is devised for communicating with the flight control unit 6 of the UAV 1 for providing said flight control unit 6 with data related to said measured at least one physical property, so that said data can be used for controlling operation of the UAV 1.

Interface control unit 8d comprises power electronics 8da, which power electronics 8da are devised for adapting a power characteristic of the control unit 8d to a power characteristic of the UAV 1 and/or to a power characteristic of the payload 9, if the payload is (self-)powered, i.e., consumes electrical energy. Interface control unit 8d further comprises at least an logical interface unit 8db adapted for providing data related to said measured at least one physical property to the UAV 1 for triggering at least one tool or payload related function (e.g., a payload release mechanism). Preferably, however, the logical interface unit 8db is devised in the form of a computational unit, preferably a low power computational unit, i.e., a small computer, which computational unit is devised for employing a more sophisticated communication protocol enabling to exchange detailed status information between the UAV 1 (i.e., flight control unit 6) and the interface 8 and/or payload 9.

At reference numeral 8e, there is depicted an electrical energy supply unit, preferably a secondary battery unit, for supplying electrical energy to any electrical energy consuming unit comprised in the interface 8 (i.e., sensor unit 8c, control unit 8d, ...) and/or to the payload 9, if the latter is not self-powered. This avoids draining the UAV 1 in terms of electrical power, which is required for operating the flight control unit 6 and/or the propulsion units 3.

Furthermore, the interface 8 comprises at least one data communication element 8f in operative connection with said control unit 8d for at least receiving status data from the payload 9 connected to the interface 8. Payload 9 comprises a payload (main) body 9a having at least one data communication element 9b devised for providing an operative connection with said control unit 8d of the interface 8 for at least relaying status data from payload 9 to the interface 8 in a connected state., Said data communication element 9b is the counterpart of data communication element 8f and devised for connecting with the interface 8 (i.e., with said data communication element 8f) on a payload side thereof. Likewise, UAV 1 comprises at least one data communication element 10 for at least inputting input data received from interface 8 into flight control unit 6. Data communication element 10 is the counterpart of at least one data communication element 8g of the interface 8 in operative connection with said control unit 8d for communicating with the flight control unit 6 of UAV 1. In this way, said flight control unit 6 can be provided with data related to said at least one physical property measured by sensor unit 8c.

Payload body 9a further comprises at least one interface connecting element 9c attached to said payload body 9a, said interface connecting element 9c being devised for connecting with the interface 8 on said payload side thereof. Interface connecting element 9c is the (mechanical) counterpart of said least one first connecting element 8a described further up.

Reference numeral 11 depicts an optional steering unit (e.g., a wing or flap) for controlling a movement of the UAV 1 by means of control signals from flight control unit 6. In this way, said data provided to flight control unit 6 from interface 8 can be further used for controlling operation of the UAV 1.

As shown further in Fig. 2, flight control unit 6 of UAV 1 is advantageously directly connected operatively with said least one first connecting element 8a for connecting the payload 9 to the interface 8 (solid line) and/or with (dash-dotted line) said at least one interface connecting element 9c attached to said main payload body 9a. Both said connecting elements 8a, 9c can be devised as actuated locking mechanisms which can be actuated by means of a suitable control signal (from flight control unit 6). In this way, if flight control unit 6, based on the payload related data relayed by payload 9 itself and/or by sensor unit 8c (via interface control unit 8d), decides that a mission cannot be (safely) completed with payload 9 attached to the UAV, it may actuate connecting elements 8a and/or 9c in order to drop payload 9 - for instance in case of an emergency or in case of a terrain unsuitable for landing in order to deliver payload 9.

In this way, there is provided a method of operating an Unmanned Aerial Vehicle, UAV 1, wherein the flight control unit 6 is devised for providing a signal for changing a connecting state of said payload 9 between a first connecting state, in which first connecting state said payload 9 is or can be fastened to the interface 8, and a second connecting state, in which second connecting state said payload 9 is or can be detached from the interface 8.

Furthermore, there is provided a method of operating an Unmanned Aerial Vehicle, UAV 1, which method comprises connecting a payload 9 to an UAV 1, using the interface 8 as defined above, providing the UAV 1, preferably repeatedly during operation thereof, through said interface 8 with status data from the pay-load 9 connected to the interface 8 **and/or with** data measured by said interface 8 (i.e., sensor unit 8c); and using said status data and/or said data in the flight control unit 6 of the UAV 1 for controlling an operation of the UAV 1 and/or for controlling a connecting state of the payload 9.

Fig. 3 shows various views a) through d) of a particular kind of interface 8.

Fig. 3a) is a perspective view of interface 8 which takes on the overall form of a square plate (without limitation). As can be gathered from Fig. 3a), the at least one second connecting element 8b for connecting the interface 8 to the UAV 1, i.e., the UAV main body 2 (Fig. 1, 2) is devised in the form of four hook-shaped projections extending from the interface plate, each projection comprising a pin or bolt 8ba for mechanical interaction with counterpart payload connecting element 7 (Fig. 2). All pins 8ba are arranged in a common plane parallel to the interface plate. A load cell (not shown as such), which forms a sensor unit 8c (Fig. 2), can be integrated in each of the hook-shaped projections. With said pins 8ba, the interface 8 can be secured to the UAV through said load cells fastened to both interface 8 and UAV via four anchor points. In this realization, the force and moment of the payload can be measured directly on the four anchoring points. Please do also refer to Fig. 3d) (top view) in this context. Control unit 8d is operative connected with all load cells, which is only depicted for one of the load cells in Fig. 3a).

The first connecting element 8a for connecting a payload to the interface 8 on a payload side thereof is devised in the form of two aerospace standard profiles or rails located parallel to each other on a side of the interface plate opposite said hook-shaped projections, cf. Figs. 3b) (bottom view) and 3c) (side view). On said profiles or rails, any payload can be simply and securely attached with a range of aerospace standard attachments that can be obtained off the shelf, e.g., a simple pin mechanism.

## Claims

1. A system comprising an Unmanned Aerial Vehicle, UAV (1), and an interface (8) for attaching a tool or a payload (9) to said UAV (1), wherein said interface (8) comprises:
on a tool or payload side of the interface (8), at least one first connecting element (8a) for connecting the tool or payload (9) to the interface (8) on said tool or payload side thereof;
on a vehicle side of the interface (8), at least one second connecting element (8b) connecting the interface (8) to the UAV (1) on said vehicle side thereof;
at least one sensor unit (8c), which sensor unit (8c) is devised for measuring at least one physical property of the tool or payload (9), when said tool or payload (9) is connected to the interface (8);
at least one control unit (8d) in operative connection with said at least one sensor unit (8c) and with at least one data communication element (8g), which control unit (8d) is devised for communicating with a flight control unit (6) of the UAV (1) for providing said flight control unit (6) with data related to said measured at least one physical property via said at least one data communication element (8g); and wherein
said UAV (1) comprises:
a main airframe (2);
at least one propulsion unit (3) devised for moving the UAV (1) and attached to said main airframe (2);
at least said flight control unit (6) for controlling said at least one propulsion unit (3);
at least one tool or payload connecting element (7) attached to said main airframe (2), said tool or payload connecting element (7) being connected with the interface (8) on the vehicle side thereof;
at least one data communication element (10) for at least inputting input data received from said interface (8) into said least one flight control unit (6);
wherein said interface (8) is mechanically fastened, preferably detachably fastened, to said UAV (1); and
wherein said interface (8) and said UAV (1) are operatively connected via said at least one data communication element (10) of the UAV (1) and said at least one data communication element (8g) of the interface (8)
**characterized in that**
said interface (8) further comprises a human machine interface on the interface (8) in connection with a database for choosing, from said database, payload- or tool-specific data for transmission to the flight control unit (6) of the UAV (1), wherein preferably the human machine interface comprises a touchpad or display with input means for inputting and/or selecting, e.g. from said database, tool/payload data, such as e.g. weight, dimensions, etc., and/or for displaying the status of an electrical energy supply unit, e.g. a battery, of the tool or payload or the interface, and/or for triggering a functionality of the tool for test before flight.

2. The system of claim 1, wherein
the at least one sensor unit (8c) comprises a force sensor, in particular a load cell.

3. The system of claim 1 or 2, wherein
the at least one second connecting element (8b) comprises a pin or bolt type connector.

4. The system of any one of claims 1 through 3, wherein
the at least one control unit (8d) comprises power electronics (8da), which power electronics (8da) are devised for adapting a power characteristic of the control unit (8d) to a power characteristic of the UAV (1) and/or to a power characteristic of the tool or payload (9).

5. The system of any one of claims 1 through 4, wherein
the at least one control unit (8d) comprises a logical interface unit (8db) adapted for providing data related to said measured at least one physical property to the UAV (1) for triggering at least one tool or payload related function.

6. The system of any one of claims 1 through 5, wherein
the at least one control unit (8d) comprises a computational unit (8db), preferably a low power computational unit (8db), which computational unit (8db) is devised for employing a communication protocol enabling to exchange status information between the UAV (1) and the tool or payload (9).

7. The system of any one of claims 1 through 6, further comprising:
at least one electrical energy supply unit (8e), preferably a secondary battery unit, for supplying electrical energy to any electrical energy consuming unit comprised in the interface (8) and/or to a tool or payload (9).

8. The system of any one of claims 1 through 7, further comprising:
at least one data communication element (8f) in operative connection with said control unit (8d) for at least receiving status data from a tool or payload (9) connected to the interface (8).

9. The system of any one of claims 1 through 8, wherein said least one flight control unit (6) is furthermore devised for controlling an additional steering unit (11) for controlling a movement of the UAV (1) based on said input data.

10. The system of any one of claims 1 through 9, further comprising a tool or payload (9) for use with said UAV (1), said tool or payload (9) comprising:
a tool or payload body (9a);
at least one interface connecting element (9c) attached to said tool or payload body (9a), said interface connecting element (9c) being devised for connecting with the interface (8) on the tool or payload side thereof.

11. The system of claim 10, further comprising, in said tool or payload (9):
at least one data communication element (9b) devised for providing an operative connection with said control unit (8d) of the interface (8) for at least relaying status data from the tool or payload **(9)** to the interface (8) in a connected state.

12. The system of claim 10, wherein
said interface connecting element (9c) of the tool or payload (9) is mechanically fastened or fastenable, preferably detachably fastened or fastenable, to said interface (8) on said tool or payload side thereof;
wherein preferably the interface (8) and the tool or payload (9) are operatively connected or connectable via at least one data communication element (9b) of the tool or payload (9).

13. The system of any one of claims 1 through 12, wherein
said least one flight control unit (6) is devised for providing a signal for changing a connecting state of said tool or payload (9) between a first connecting state, in which first connecting state said tool or payload (9) is or can be fastened to the interface (8), and a second connecting state, in which second connecting state said tool or payload (9) is or can be detached from the interface (8).

14. A method of operating an Unmanned Aerial Vehicle, UAV (1), comprising:
connecting a tool or payload (9) to the UAV (1), using a tool or payload interface (8), which interface (8) comprises:
on a tool or payload side of the interface (8), at least one first connecting element (8a) for connecting a tool or payload (9) to the interface (8) on said tool or payload side thereof;
on a vehicle side of the interface (8), at least one second connecting element (8b) for connecting the interface (8) to the I UAV (1) on said vehicle side thereof;
at least one sensor unit (8c), which sensor unit (8c) is devised for measuring at least one physical property of the tool or payload (9), when said tool or payload (9) is connected to the interface (8);
at least one control unit (8d) in operative connection with said at least one sensor unit (8c) and with at least one data communication element (8g), which control unit (8d) is devised for communicating with a flight control unit (6) of the UAV (1) for providing said flight control unit (6) with data related to said measured at least one physical property via said at least one data communication element (8g);
a human machine interface on the interface (8) in connection with a database for choosing, from said database, payload- or tool-specific data for transmission to a flight control unit (6) of an UAV (1), wherein preferably the human machine interface comprises a touchpad or display with input means for inputting and/or selecting, e.g. from said database, tool/payload data, such as e.g. weight, dimensions, etc., and/or for displaying the status of an electrical energy supply unit, e.g. a battery, of the tool or payload or the interface, and/or for triggering a functionality of the tool for test before flight;
the method further comprising:
providing the UAV (1), preferably repeatedly during operation, through said tool or payload interface (8) with status data from said tool or payload (9) connected to the interface **and/or with** data from said tool or payload interface (8); and
using said status data and/or said data in at least one flight control unit (6) of the UAV (1) for controlling an operation of the UAV (1) and/or for controlling a connecting state of the tool or payload (9).

## Patentansprüche

1. System, umfassend ein unbemanntes Luftfahrzeug (Unmanned Aerial Vehicle), UAV (1), und eine Schnittstelle (8) zum Anbringen eines Werkzeugs oder einer Nutzlast (9) an dem UAV (1), wobei die Schnittstelle (8) umfasst:
auf einer Werkzeug- oder Nutzlastseite der Schnittstelle (8), mindestens ein erstes Verbindungselement (8a) zum Verbinden des Werkzeugs bzw. der Nutzlast (9) mit der Schnittstelle (8) auf deren Werkzeug- bzw. Nutzlastseite;
auf einer Fahrzeugseite der Schnittstelle (8), mindestens ein zweites Verbindungselement (8b), welches die Schnittstelle (8) mit dem UAV (1) auf deren Fahrzeugseite verbindet;
mindestens eine Sensoreinheit (8c), wobei die Sensoreinheit (8c) zum Messen mindestens einer physikalischen Eigenschaft des Werkzeugs bzw.der Nutzlast (9) ausgelegt ist, wenn das Werkzeug bzw. die Nutzlast (9) mit der Schnittstelle (8) verbunden ist;
mindestens eine Steuereinheit (8d) in wirksamer Verbindung mit der mindestens einen Sensoreinheit (8c) und mit mindestens einem Datenkommunikationselement (8g), wobei die Steuereinheit (8d) zum Kommunizieren mit einer Flugsteuereinheit (6) des UAV (1) ausgelegt ist, um die Flugsteuereinheit (6) über das mindestens eine Datenkommunikationselement (8g) mit Daten zu versorgen, die sich auf die gemessene mindestens eine physikalische Eigenschaft beziehen; und wobei
das UAV (1) umfasst:
einen Haupt-Airframe (2);
mindestens eine Vorschubeinheit (3), die zum Bewegen des UAV (1) ausgelegt und an dem Haupt-Airframe (2) befestigt ist;
mindestens die Flugsteuereinheit (6) zum Steuern der mindestens einen Vorschubeinheit (3);
mindestens ein Werkzeug- oder Nutzlast-Verbindungselement (7), das an dem Haupt-Airframe (2) befestigt ist, wobei das Werkzeug- oder Nutzlast-Verbindungselement (7) mit der Schnittstelle (8) auf deren Fahrzeugseite verbunden ist;
mindestens ein Datenkommunikationselement (10) zum zumindest Eingeben aus der Schnittstelle (8) empfangener Eingabedaten in die mindestens eine Flugsteuereinheit (6);
wobei die Schnittstelle (8) an dem UAV (1) mechanisch befestigt, vorzugsweise lösbar befestigt, ist; und
wobei die Schnittstelle (8) und das UAV (1) über das mindestens eine Datenkommunikationselement (10) des UAV (1) und das mindestens eine Datenkommunikationselement (8g) der Schnittstelle (8) wirksam miteinander verbunden sind,
**dadurch gekennzeichnet, dass**
die Schnittstelle (8) ferner eine Mensch-Maschine-Schnittstelle an der Schnittstelle (8) in Verbindung mit einer Datenbank umfasst, um aus der Datenbank nutzlast- oder werkzeugspezifische Daten zur Übertragung an die Flugsteuereinheit (6) des UAV (1) auszuwählen, wobei die Mensch-Maschine-Schnittstelle vorzugsweise ein Touchpad oder eine Anzeige mit Eingabemitteln zum Eingeben und/oder Auswählen, z. B. aus der Datenbank, von Werkzeug-/Nutzlast-Daten, wie zum Beispiel Gewicht, Abmessungen usw., und/oder zum Anzeigen des Status einer elektrischen Energieversorgungseinheit, z. B. eines Akku, des Werkzeugs oder der Nutzlast oder der Schnittstelle, und/oder zum Auslösen einer Funktionalität des Werkzeugs zum Test vor dem Flug umfasst.

2. System gemäß Anspruch 1, wobei
die mindestens eine Sensoreinheit (8c) einen Kraftsensor, insbesondere eine Kraftmesszelle, umfasst.

3. System gemäß Anspruch 1 oder 2, wobei
das mindestens eine zweite Verbindungselement (8b) ein stift- oder bolzenartiges Verbindungselement umfasst.

4. System gemäß einem der Ansprüche 1 bis 3, wobei
die mindestens eine Steuereinheit (8d) eine Leistungselektronik (8da) umfasst, wobei die Leistungselektronik (8da) dazu ausgelegt ist, eine Leistungscharakteristik der Steuereinheit (8d) an eine Leistungscharakteristik des UAV (1) und/oder an eine Leistungscharakteristik des Werkzeugs oder der Nutzlast (9) anzupassen.

5. System gemäß einem der Ansprüche 1 bis 4, wobei
die mindestens eine Steuereinheit (8d) eine logische Schnittstelleneinheit (8db) umfasst, die dazu angepasst ist, Daten, die sich auf die gemessene mindestens eine physikalische Eigenschaft beziehen, an das UAV (1) zu liefern, um mindestens eine Werkzeug- oder nutzlastbezogene Funktion auszulösen.

6. System gemäß einem der Ansprüche 1 bis 5, wobei
die mindestens eine Steuereinheit (8d) eine Recheneinheit (8db), vorzugsweise eine Recheneinheit (8db) mit niedrigem Stromverbrauch, umfasst, wobei die Recheneinheit (8db) zum Verwenden eines Kommunikationsprotokolls ausgelegt ist, das einen Austausch von Statusinformationen zwischen dem UAV (1) und dem Werkzeug oder der Nutzlast (9) ermöglicht.

7. System gemäß einem der Ansprüche 1 bis 6, ferner umfassend:
mindestens eine elektrische Energieversorgungseinheit (8e), vorzugsweise eine Akkueinheit, zum Liefern elektrischer Energie an eine in der Schnittstelle (8) enthaltene, elektrische Energie verbrauchende Einheit und/oder an ein Werkzeug oder eine Nutzlast (9).

8. System gemäß einem der Ansprüche 1 bis 7, ferner umfassend:
mindestens ein Datenkommunikationselement (8f) in wirksamer Verbindung mit der Steuereinheit (8d) zumindest zum Empfangen von Statusdaten von einem Werkzeug oder einer Nutzlast (9), das bzw. die mit der Schnittstelle (8) verbunden ist.

9. System gemäß einem der Ansprüche 1 bis 8, wobei die mindestens eine Flugsteuereinheit (6) ferner dazu ausgelegt ist, eine zusätzliche Lenkeinheit (11) zu steuern, um eine Bewegung des UAV (1) auf Basis der Eingabedaten zu steuern.

10. System gemäß einem der Ansprüche 1 bis 9, ferner umfassend ein Werkzeug oder eine Nutzlast (9) zur Verwendung mit dem UAV (1), wobei das Werkzeug oder die Nutzlast (9) umfasst:
einen Werkzeug- oder Nutzlastkörper (9a);
mindestens ein Schnittstellenverbindungselement (9c), das an dem Werkzeug- oder Nutzlastkörper (9a) befestigt ist, wobei das Schnittstellenverbindungselement (9c) zur Verbindung mit der Schnittstelle (8) auf deren Werkzeug- oder Nutzlastseite ausgelegt ist.

11. System gemäß Anspruch 10, ferner umfassend, in dem Werkzeug bzw. der Nutzlast (9):
mindestens ein Datenkommunikationselement (9b), das zum Bereitstellen einer wirksamen Verbindung mit der Steuereinheit (8d) der Schnittstelle (8) zumindest zum Weiterleiten von Statusdaten von dem Werkzeug oder der Nutzlast (9) an die Schnittstelle (8) in einem verbundenen Zustand ausgelegt ist.

12. System gemäß Anspruch 10, wobei
das Schnittstellenverbindungselement (9c) des Werkzeugs oder der Nutzlast (9) an der Schnittstelle (8) auf deren Werkzeug- oder Nutzlastseite mechanisch befestigt oder befestigbar, vorzugsweise lösbar befestigt oder befestigbar, ist;
wobei die Schnittstelle (8) und das Werkzeug oder die Nutzlast (9) vorzugsweise über mindestens ein Datenkommunikationselement (9b) des Werkzeugs oder der Nutzlast (9) wirksam verbunden oder verbindbar sind.

13. System gemäß einem der Ansprüche 1 bis 12, wobei
die mindestens eine Flugsteuereinheit (6) zum Bereitstellen eines Signals zum Ändern eines Verbindungszustands des Werkzeugs oder der Nutzlast (9) zwischen einem ersten Verbindungszustand, wobei in dem ersten Verbindungszustand das Werkzeug oder die Nutzlast (9) an der Schnittstelle (8) befestigt ist oder befestigt werden kann, und einem zweiten Verbindungszustand, wobei in dem zweiten Verbindungszustand das Werkzeug oder die Nutzlast (9) von der Schnittstelle (8) gelöst wird oder gelöst werden kann, ausgelegt ist.

14. Verfahren zum Betreiben eines unbemannten Luftfahrzeugs (Unmanned Aerial Vehicle), UAV (1), umfassend:
Verbinden eines Werkzeugs oder einer Nutzlast (9) mit dem UAV (1) unter der Verwendung einer Werkzeug- oder Nutzlast-Schnittstelle (8), wobei die Schnittstelle (8) umfasst:
auf einer Werkzeug- oder Nutzlastseite der Schnittstelle (8), mindestens ein erstes Verbindungselement (8a) zum Verbinden eines Werkzeugs bzw.einer Nutzlast (9) mit der Schnittstelle (8) auf deren Werkzeug- bzw. Nutzlastseite;
auf einer Fahrzeugseite der Schnittstelle (8), mindestens ein zweites Verbindungselement (8b) zum Verbinden der Schnittstelle (8) mit dem UAV (1) auf deren Fahrzeugseite;
mindestens eine Sensoreinheit (8c), wobei die Sensoreinheit (8c) zum Messen mindestens einer physikalischen Eigenschaft des Werkzeugs bzw.der Nutzlast (9) ausgelegt ist, wenn das Werkzeug bzw. die Nutzlast (9) mit der Schnittstelle (8) verbunden ist;
mindestens eine Steuereinheit (8d) in wirksamer Verbindung mit der mindestens einen Sensoreinheit (8c) und mit mindestens einem Datenkommunikationselement (8g), wobei die Steuereinheit (8d) zum Kommunizieren mit einer Flugsteuereinheit (6) des UAV (1) ausgelegt ist, um die Flugsteuereinheit (6) über das mindestens eine Datenkommunikationselement (8g) mit Daten zu versorgen, die sich auf die gemessene mindestens eine physikalische Eigenschaft beziehen;
eine Mensch-Maschine-Schnittstelle an der Schnittstelle (8) in Verbindung mit einer Datenbank, um aus der Datenbank nutzlast- oder werkzeugspezifische Daten zur Übertragung an die Flugsteuereinheit (6) des UAV (1) auszuwählen, wobei die Mensch-Maschine-Schnittstelle vorzugsweise ein Touchpad oder eine Anzeige mit Eingabemitteln zum Eingeben und/oder Auswählen, z. B. aus der Datenbank, von Werkzeug-/Nutzlast-Daten, wie zum Beispiel Gewicht, Abmessungen usw., und/oder zum Anzeigen des Status einer elektrischen Energieversorgungseinheit, z. B. eines Akku, des Werkzeugs oder der Nutzlast oder der Schnittstelle, und/oder zum Auslösen einer Funktionalität des Werkzeugs zum Test vor dem Flug umfasst;
wobei das Verfahren ferner umfasst:
Versorgen des UAV (1), vorzugsweise wiederholt während des Betriebs, über die Werkzeug- oder Nutzlast-Schnittstelle (8), mit Statusdaten aus dem Werkzeug bzw. der Nutzlast (9), das bzw. die mit der Schnittstelle (8) verbunden ist, und/oder mit Daten aus der Werkzeug- oder Nutzlast-Schnittstelle (8); und
Verwenden der Statusdaten und/oder der Daten in mindestens einer Flugsteuereinheit (6) des UAV (1) zum Steuern eines Betriebs des UAV (1) und/oder zum Steuern eines Verbindungszustands des Werkzeugs oder der Nutzlast (9).

## Revendications

1. Système comprenant un véhicule aérien sans pilote, UAV (1), et une interface (8) pour attacher un outil ou une charge utile (9) audit UAV (1), dans lequel ladite interface (8) comprend :
sur un côté outil ou charge utile de l'interface (8), au moins un premier élément de liaison (8a) pour relier l'outil ou la charge utile (9) à l'interface (8) sur ledit côté outil ou charge utile de celle-ci ;
sur un côté véhicule de l'interface (8), au moins un deuxième élément de liaison (8b) reliant l'interface (8) à l'UAV (1) sur ledit côté véhicule de celle-ci ;
au moins une unité de capteur (8c), laquelle unité de capteur (8c) est conçue pour mesurer au moins une propriété physique de l'outil ou de la charge utile (9), quand ledit outil ou charge utile (9) est relié à l'interface (8) ;
au moins une unité de commande (8d) en liaison fonctionnelle avec ladite au moins une unité de capteur (8c) et avec au moins un élément de communication de données (8g), laquelle unité de commande (8d) est conçue pour communiquer avec une unité de commande de vol (6) de l'UAV (1) pour fournir à ladite unité de commande de vol (6) des données liées à ladite au moins une propriété physique mesurée via ledit au moins un élément de communication de données (8g) ; et dans lequel ledit UAV (1) comprend :
un châssis principal (2) ;
au moins une unité de propulsion (3) conçue pour déplacer l'UAV (1) et attachée audit châssis principal (2) ;
au moins ladite unité de commande de vol (6) pour commander ladite au moins une unité de propulsion (3) ;
au moins un élément de liaison d'outil ou de charge utile (7) attaché audit châssis principal (2), ledit élément de liaison d'outil ou de charge utile (7) étant relié à l'interface (8) sur le côté véhicule de celle-ci ;
au moins un élément de communication de données (10) pour au moins entrer des données d'entrée reçues en provenance de ladite interface (8) dans ladite au moins une unité de commande de vol (6) ;
dans lequel ladite interface (8) est fixée mécaniquement, de préférence fixée de manière détachable, audit UAV (1) ; et
dans lequel ladite interface (8) et ledit UAV (1) sont reliés fonctionnellement via ledit au moins un élément de communication de données (10) de l'UAV (1) et ledit au moins un élément de communication de données (8g) de l'interface (8) **caractérisé en ce que** ladite interface (8) comprend en outre une interface homme-machine sur l'interface (8) en liaison avec une base de données pour choisir, depuis ladite base de données, des données propres à la charge utile ou à l'outil pour une transmission à l'unité de commande de vol (6) de l'UAV (1), dans lequel de préférence l'interface homme-machine comprend un pavé tactile ou affichage avec des moyens d'entrée pour entrer et/ou sélectionner, par exemple depuis ladite base de données, des données d'outil/charge utile, comme par exemple un poids, des dimensions, etc., et/ou pour afficher l'état d'une unité d'alimentation en énergie électrique, par exemple une batterie, de l'outil ou de la charge utile ou de l'interface, et/ou pour déclencher une fonctionnalité de l'outil pour un test avant le vol.

2. Système de la revendication 1, dans lequel
la au moins une unité de capteur (8c) comprend un capteur de force, en particulier une cellule de charge.

3. Système de la revendication 1 ou 2, dans lequel
le au moins un deuxième élément de liaison (8b) comprend un raccordement du type à broche ou à boulon.

4. Système de l'une quelconque des revendications 1 à 3, dans lequel la au moins une unité de commande (8d) comprend une électronique de puissance (8da), laquelle électronique de puissance (8da) est conçue pour adapter une caractéristique de puissance de l'unité de commande (8d) à une caractéristique de puissance de l'UAV (1) et/ou à une caractéristique de puissance de l'outil ou de la charge utile (9).

5. Système de l'une quelconque des revendications 1 à 4, dans lequel la au moins une unité de commande (8d) comprend une interface logique (8db) adaptée pour fournir des données liées à ladite au moins une propriété physique mesurée à l'UAV (1) pour déclencher au moins une fonction liée à l'outil ou à la charge utile.

6. Système de l'une quelconque des revendications 1 à 5, dans lequel la au moins une unité de commande (8d) comprend une unité informatique (8db), de préférence une unité informatique (8db) à faible puissance, laquelle unité informatique (8db) est conçue pour employer un protocole de communication permettant d'échanger des informations d'état entre l'UAV (1) et l'outil ou la charge utile (9).

7. Système de l'une quelconque des revendications 1 à 6, comprenant en outre :
au moins une unité d'alimentation en énergie électrique (8e), de préférence une unité de batterie secondaire, pour alimenter en énergie électrique n'importe quelle unité consommant de l'énergie électrique comprise dans l'interface (8) et/ou un outil ou une charge utile (9).

8. Système de l'une quelconque des revendications 1 à 7, comprenant en outre :
au moins un élément de communication de données (8f) en liaison fonctionnelle avec ladite unité de commande (8d) pour au moins recevoir des données d'état depuis un outil ou une charge utile (9) reliée à l'interface (8).

9. Système de l'une quelconque des revendications 1 à 8, dans lequel ladite au moins une unité de commande de vol (6) est en outre conçue pour commander une unité de pilotage supplémentaire (11) pour commander un déplacement de l'UAV (1) sur la base desdites données d'entrée.

10. Système de l'une quelconque des revendications 1 à 9, comprenant en outre un outil ou une charge utile (9) à utiliser avec ledit UAV (1), ledit outil ou charge utile (9) comprenant :
un corps d'outil ou de charge utile (9a) ;
au moins un élément de liaison d'interface (9c) attaché audit corps d'outil ou de charge utile (9a), ledit élément de liaison d'interface (9c) étant conçu pour une liaison avec l'interface (8) sur le côté outil ou charge utile de celle-ci.

11. Système de la revendication 10, comprenant en outre une liaison fonctionnelle avec ladite unité de commande (8d) de l'interface (8) pour au moins relayer des données d'état de l'outil ou de la charge utile (9) à l'interface (8) dans un état relié.

12. Système de la revendication 10, dans lequel
ledit élément de liaison d'interface (9c) de l'outil ou de la charge utile (9) est fixé ou apte à être fixé mécaniquement, de préférence fixé ou apte à être fixé de manière détachable, à l'interface (8) sur le côté outil ou charge utile de celle-ci ;
dans lequel de préférence l'interface (8) et l'outil ou la charge utile (9) sont reliés ou aptes à être reliés fonctionnellement via au moins un élément de communication de données (9b) de l'outil ou de la charge utile (9).

13. Système de l'une quelconque des revendications 1 à 12, dans lequel ladite au moins une unité de commande de vol (6) est conçue pour fournir un signal pour changer un état de liaison dudit outil ou de ladite charge utile (9) entre un premier état de liaison, dans lequel ledit outil ou charge utile (9) est ou peut être fixé à l'interface (8), et un deuxième état de liaison, dans lequel ledit outil ou charge utile (9) est ou peut être détaché de l'interface (8).

14. Procédé de fonctionnement d'un véhicule aérien sans pilote, UAV (1), comprenant :
relier un outil ou charge utile (9) à l'UAV (1), en utilisant une interface d'outil ou de charge utile (8), laquelle interface (8) comprend :
sur un côté outil ou charge utile de l'interface (8), au moins un premier élément de liaison (8a) pour relier un outil ou une charge utile (9) à l'interface (8) sur ledit côté outil ou charge utile de celle-ci ;
sur un côté véhicule de l'interface (8), au moins un deuxième élément de liaison (8b) pour relier l'interface (8) à l'UAV (1) sur ledit côté véhicule de celle-ci ;
au moins une unité de capteur (8c), laquelle unité de capteur (8c) est conçue pour mesurer au moins une propriété physique de l'outil ou de la charge utile (9), quand ledit outil ou charge utile (9) est relié à l'interface (8) ;
au moins une unité de commande (8d) en liaison fonctionnelle avec ladite au moins une unité de capteur (8c) et avec au moins un élément de communication de données (8g), laquelle unité de commande (8d) est conçue pour communiquer avec une unité de commande de vol (6) de l'UAV (1) pour fournir à ladite unité de commande de vol (6) des données liées à ladite au moins une propriété physique mesurée via ledit au moins un élément de communication de données (8g) ;
une interface homme-machine sur l'interface (8) en liaison avec une base de données pour choisir, depuis ladite base de données, des données propres à la charge utile ou à l'outil pour une transmission à une unité de commande de vol (6) d'un UAV (1), dans lequel de préférence l'interface homme-machine comprend un pavé tactile ou affichage avec des moyens d'entrée pour entrer et/ou sélectionner, par exemple depuis ladite base de données, des données d'outil/charge utile, comme par exemple un poids, des dimensions, etc., et/ou pour afficher l'état d'une unité d'alimentation en énergie électrique, par exemple une batterie, de l'outil ou de la charge utile ou de l'interface, et/ou pour déclencher une fonctionnalité de l'outil pour un test avant le vol ;
le procédé comprenant en outre :
fournir à l'UAV (1), de préférence de manière répétée pendant le fonctionnement, par ladite interface d'outil ou de charge utile (8) des données d'état depuis ledit outil ou charge utile (9) relié à l'interface et/ou des données depuis ladite interface d'outil ou de charge utile (8) ; et
utiliser lesdites données d'état et/ou lesdites données dans au moins une unité de commande de vol (6) de l'UAV (1) pour commander un fonctionnement de l'UAV (1) et/ou pour commander un état de liaison de l'outil ou de la charge utile (9).
